# EUROPÄISCHE PATENTSCHRIFT

(11) **EP 2 795 000 B1**
(45) Veröffentlichungstag und Bekanntmachung des Hinweises auf die Patenterteilung: **17.05.2017**
(21) Anmeldenummer: 12797841.9
(22) Anmeldetag: 29.11.2012
(51) Int. Cl.: E02D 27/42, E02D 37/00

(54) **VERFAHREN ZUR STABILISIERUNG EINER WINDENERGIEANLAGE**
METHOD OF STABILIZATION THE FOUNDATION OF A WIND MOTOR
PROCÉDÉ DE STABILISATION D'UNE FONDATION D'UNE ÉOLIÈNNE

(30) Priorität: 22.12.2011 DE 102011089522
(43) Veröffentlichungstag der Anmeldung: 29.10.2014
(73) Patentinhaber: Wobben Properties GmbH, 26607 Aurich (DE)
(72) Erfinder: VOGEL, Markus, 26121 Oldenburg (DE)
(74) Vertreter: Eisenführ Speiser
(86) Internationale Anmeldenummer: PCT/EP2012/073888
(87) Internationale Veröffentlichungsnummer: WO 2013/092148

(56) Entgegenhaltungen:
- DE-A1- 3 733 537
- DE-A1-102010 028 038
- DE-U1-202010 007 750

## Beschreibung

Die vorliegende Erfindung betrifft ein Verfahren zur Stabilisierung einer Windenergieanlage nach dem Obergriff von Anspruch 1. Die Erfindung betrifft somit insbesondere ein Verfahren zur Stabilisierung der Verbindung einer Fundamentsektion der Windenergieanlage mit dem Fundament der Windenergieanlage, umfassend die Schritte: Durchführen einer Stabilisierungsmaßnahme, umfassend Vorbereiten zumindest eines Abschnitts der Oberfläche eines Fundaments der Windenergieanlage zum Ansetzen von Bohrmitteln, Einbringen einer Vielzahl von Bohrungen mittels der Bohrmittel in die vorbereitete Oberfläche bis zu einer vorbestimmten Tiefe, vorzugsweise bis zu einem Ankersegment der Fundamentsektion, Einbringen einer aushärtbaren Masse in die Vielzahl von Bohrungen, Aushärten der eingebrachten, aushärtbaren Masse in den Bohrungen, und Nachbereiten des zumindest einen Abschnitts der Oberfläche des Anlagenfundaments.

In der prioritätsbegründenden Anmeldung sind vom Deutschen Patent- und Markenamt die Druckschriften WO 2010/084 210 A1, DE 37 33 537 A1 und DE 10 2008 032 184 A1 ermittelt worden.

Aus DE 20 2010 007 750 U1 ist ein ertüchtigtes Fundament bekannt, bei dem auf das Fundament eine Ertüchtigungsschicht aus Beton aufgebracht ist, wobei zumindest eine durch die Ertüchtigungsschicht verlaufende und in das Fundament eingebrachte Bohrung vorhanden ist, wobei in der Bohrung ein die Ertüchtigungsschicht durchgreifender und in das Fundament ragender Anker vorgesehen ist, wobei der in der Bohrung verbleibende Bohrungsfreiraum von einem erhärteten Vergussmaterial ausgefüllt ist bzw. im Wesentlichen ausgefüllt ist und wobei der Anker mittels zumindest eines am Ankerkopf vorgesehenen Vorspannelements vorgespannt ist.

Aus DE 37 33 537 A1 ist ein Verfahren zur Sanierung von Betonfundamenten an Masten und dergleichen bekannt, bei dem innerhalb der Fundamente in der Umgebung von Stahlprofilen, welche zur Halterung von Maststielen dienen, gebildete Bruchzonen, in denen sich auch dann Wasser ansammelt, wenn die Oberseite der Fundamente völlig wasserdicht abgedeckt ist, unter Verdrängung des Wassers mit Kunststoff verfüllt werden, welcher durch Bohrungen, die im Fundament angelegt werden, eingedrückt wird.

Verfahren der vorstehend genannten Art kommen bei Windenergieanlagen zum Einsatz. Die Notwendigkeit solcher Stabilisierungsverfahren ergibt sich daraus, dass die Windenergieanlagen aufgrund wechselnder Windrichtungen und Wandstärken dynamischen Belastungen ausgesetzt sind. Die Türme von Windenergieanlagen sind typischerweise mit einem unteren Bereich, der als Fundamentsektion ausgeführt sein kann, in ein Betonfundament eingelassen. Die Fundamentsektion besteht hierbei häufig aus Stahl oder hochfestem Material, um welches herum der Fundamentbeton aushärtet. Hierdurch wird ein Kraftschluss hergestellt. Aufgrund der dynamischen Beanspruchung der Windenergieanlage, möglicherweise verstärkt durch fehlerhafte Installation oder nicht ausreichendes Aushärten des Fundamentmaterials kommt es mit zunehmender Standzeit der Windenergieanlagen zu Auflockerungen des die Fundamentsektion umgebenden Fundamentmaterials, und in der Folge zu einem Auftreten von Bewegungsspiel und Rissbildung. Hierdurch wird letztlich die Standfestigkeit bei geringer werdendem Kraftschluss zwischen Fundamentsektion und Fundament beeinträchtigt. Um einen weiteren Betrieb der Windenergieanlage gewährleisten zu können, ist eine Stabilisierung der Windenergieanlage, das heißt Wiederherstellung eines ausreichenden Kraftschlusses zwischen Fundamentsektion und Fundament, notwendig.

Es sind Verfahren bekannt, die eine Stabilisierung des Fundaments der Windenergieanlage ermöglichen, ohne die Windenergieanlage oberhalb des Fundaments vollständig demontieren zu müssen. Ein solches Verfahren ist aus DE 10 2009 022 540.4 bekannt. In wesentlichen Grundzügen basiert das dort offenbarte Verfahren auf einem Anheben der gesamten Windenergieanlage mittels eines oder mehrerer Hubmittel, beispielsweise Hydraulikpressen, in die obere Spielendlage eines sich um ein Ankersegment der Windenergieanlage herum bildenden Hohlraums. Nach dem Anheben und Fixieren der Windenergieanlage in dieser oberen Position wird in einem Injektionsverfahren der Hohlraum unterhalb des in der oberen Spielendlage befindlichen Ankersegments ausgefüllt, und die Hubmittel nach dem Aushärten des Füllmaterials entfernt.

Während die vorstehend beschriebenen Verfahren eine Verbesserung der Wartungsfreundlichkeit gegenüber dem vollständigen Außerbetriebsetzen und Abbauen der Windenergieanlage bedeuten, besteht dennoch erhebliches Verbesserungspotenzial hinsichtlich der Wartungszeit und der Wartungskosten, die bei bekannten Anlagen im Bereich von mehreren zehntausend Euro oder sogar deutlich höher liegen. Der Erfindung liegt somit die Aufgabe zugrunde, ein Verfahren der eingangs genannten Art anzugeben, welches bei geringerem Kostenaufwand die Stabilisierung einer Windenergieanlage ermöglicht, und gleichzeitig die Ausfallzeit der Windenergieanlage so gering wie möglich hält.

Die Erfindung löst die ihr zugrunde liegende Aufgabe bei einem Verfahren der eingangs genannten Art gemäß einem ersten Aspekt durch den Schritt: Durchführen einer Früherkennung des Stabilisierungsbedarfs der Windenergieanlage mittels Messen der Turmbewegung während des Betriebs der Windenergieanlage.

Die Merkmale und bevorzugten Ausführungsformen dieses Aspektes sind zugleich vorteilhafte Weiterbildungen der (weiter unten beschriebenen zweiten und dritten Aspekte der Erfindung).

Die Erfindung macht sich die Erkenntnis zu Nutze, dass die Verfahren der bekannten Art zu einem Zeitpunkt zum Einsatz kommen, wenn die Beschädigung des Anlagenfundaments bereits so weit fortgeschritten ist, dass eine Stabilisierung mittels Anheben unausweichlich ist. Die Gründe für eine späte Erkennung des Stabilisierungsbedarfs sind vielfältig, und liegen beispielsweise in der Art und Weise der Verfüllung des oberen Bereichs des Anlagenfundaments, sodass Schäden und Rissbildung gar nicht oder nur spät erkannt werden. Die Erfindung setzt hier an, indem sie zur Früherkennung ein Messen der Turmbewegung während des Betriebs der Windenergieanlage einsetzt. Vorzugsweise umfasst die Früherkennung hierbei das Messen einer vertikalen Turmbewegung relativ zu dem Fundament der Windenergieanlage mittels eines oder mehrerer Längenänderungssensoren (Wegaufnehmer), die an der Luvseite und/oder der Leeseite des Turms positioniert sind oder werden. Die Turmbewegung, insbesondere die vertikale Turmbewegung ist ein wichtiger Indikator für das Vorhandensein von Bewegungsspiel zwischen der Fundamentsektion der Windenergieanlage und dem Anlagenfundament. Eine solche vertikale Turmbewegung tritt auch bereits dann auf, wenn von außen noch keine Risse sichtbar sind, oder möglicherweise vorhandene Risse durch andere Elemente verdeckt sind. Auf diese Weise ist es möglich, einen Stabilisierungsbedarf der Windenergieanlage zu bestimmen, der allerdings ein solches Ausmaß annimmt, dass eine aufwendige Fixierung der Windenergieanlage mittels Hubmitteln vermieden wird. Hierdurch sinkt sowohl der Zeitbedarf für das Stabilisieren der Windenergieanlage erheblich, wie auch der Kostenaufwand, nachdem die Bereitstellung der Hubmittel entbehrlich ist. Das Durchführen der Früherkennung hingegen ist mit geringem Kosten- und Zeitaufwand realisierbar.
- Vorteilhafte Ausführungsformen ergeben sich insbesondere aus den Unteransprüchen und den nachfolgenden Ausführungen.

Der eine oder die mehreren Längenänderungssensoren werden optional zum Durchführen der Früherkennung jedesmal angebracht und mit dem Turm und dem Fundament in Verbindung gebracht, oder werden alternativ nur einmal angebracht und befinden sich sodann permanent an ihrem Messort.

Gemäß einer vorteilhaften Weiterbildung des Verfahrens umfasst die Früherkennung das Deaktivieren der Windenergieanlage, das Kalibrieren des oder der Längenänderungssensoren, das Aktivieren der Windenergieanlage, das Starten der Messung der Turmbewegung, und das Speichern der gemessenen Turmbewegung, sobald die Schwankung der von dem oder den Längenänderungssensoren ausgegebenen Werte einen vorbestimmten Wert unterschreitet, vorzugsweise einen Wert von 1 mm unterschreitet, besonders bevorzugt den Wert 0 annimmt.

Die Früherkennung umfasst weiter vorzugsweise das Feststellen der fehlenden Notwendigkeit einer Stabilisierungsmaßnahme, wenn die gespeicherte Turmbewegung einen Betrag von 3 mm oder weniger, besonders bevorzugt von 1 mm oder weniger annimmt. Bei einer derartigen festgestellten Turmbewegung wird davon ausgegangen, dass zwar bereits eine Beeinträchtigung des Kraftschlusses zwischen Fundament und Fundamentsektion stattgefunden hat, jedoch insgesamt die Standfestigkeit der Windenergieanlage noch ausreichend ist, um ohne weitere Stützmaßnahmen den Betrieb fortführen zu können.

Vorzugsweise umfasst das erfindungsgemäße Verfahren die Schritte: Kompensation der gemessenen Turmbewegung mittels Subtraktion der elastizitätsbedingten Auslenkung der Längenänderungssensoren (bzw. des Längenänderungssensors), und Speichern der kompensierten Turmbewegung. Der Betrag dieser elastizitätsbedingten Auslenkung, der sich in einer Dehnung der Turmwand ausdrückt, hängt vom jeweils untersuchten Anlagentyp ab, und insbesondere auch vom Turmdurchmesser, der Wandstärke und der Einspanntiefe der Fundamentsektion im Fundament, worunter diejenige Tiefe zu verstehen ist, in welcher der Turm im Fundament verankert ist.

Weiter vorzugsweise erfolgt das Messen der Turmbewegung mittels einer oder mehrerer Messuhren, die vorzugsweise mittels eines Magnetstativs an der Turmwand der Windenergieanlage, besonders bevorzugt an der Außenwand der Windenergieanlage angebracht sind oder mit ihr vom Fundament aus in Kontakt gebracht werden. Dies ist bevorzugt, weil messende Personen sich dann nicht den im Inneren des Turms herrschenden Sicherheitsrisiken aussetzen müssen. Alternativ wird die Anbringung im Innenbereich der Windenergieanlage bevorzugt, wenn eine Messung ohne Anwesenheit von Personen durchgeführt werden kann, beispielsweise bei vorab permanent angebrachten Messmitteln und mittels Fernbedienung. In dem Fall kann die Früherkennung bei vermindertem Einfluss äußerer Störungen durchgeführt werden.

In einer weiteren bevorzugten Ausführungsform des Verfahrens umfasst jenes die Schritte: Messen der die Windenergieanlage antreibenden Windgeschwindigkeit, und Durchführen der Früherkennung, wenn die Windgeschwindigkeit 7,5 m/s oder mehr, bevorzugt 10 m/s oder mehr beträgt. Es hat sich gezeigt, dass die Zuverlässigkeit der Messergebnisse, und insbesondere auch die Aussagekraft der Turmbewegung bei Windgeschwindigkeiten von 7,5 m/s oder mehr, bevorzugt 10 m/s oder mehr überraschend gut ist.

Das Verfahren gemäß der Erfindung umfasst weiter vorzugsweise das Überwachen der Gondelposition der Windenergieanlage während des Messens der Turmbewegung, das Abbrechen des Messvorgangs der Turmbewegung, wenn eine Veränderung der Gondelposition festgestellt wird, vorzugsweise in einem Bereich von 5° oder mehr, Neupositionieren des oder der Längenänderungssensoren an der veränderten Luvseite und/oder der veränderten Leeseite des Turms in Abhängigkeit der Veränderung der Gondelposition, und Neustarten der Messung der Turmbewegung. Um die Aussagekraft der Messung der vertikalen Turmbewegung möglichst zu maximieren, wird gemäß dieser Ausführungsform darauf geachtet, dass die Bedingungen während des Messvorgangs für die fest mit dem Turm und Fundament verbundenen Längenänderungssensoren konstant bleiben. Ändert sich die Gondelposition, kommt also der Wind von einer anderen Seite und eine andere Sektion der Turmwand - nämlich die an der neuen Luv- oder Leeseite - wird sich stärker bewegen, als die, an welcher der Sensor zuvor angebracht worden ist. Moderne Windenergieanlagen verfügen über Sensorik zum Bestimmen der Windrichtung und Steuersysteme zum Anpassen der Gondelposition auf veränderliche Windrichtungen. Vorzugsweise wird die Positionierung des oder der Längenänderungssensoren durch Kommunikation mit dem Steuersystem oder einer optischen Anzeige der Gondelposition und/oder Windrichtung vorgenommen und an diese angepasst.

Vorzugsweise wird der Schritt des Messens der Turmbewegung dreimal ausgeführt, und umfasst den Schritt des Bildens eines Mittelwerts der drei erfolgten Messungen der Turmbewegung. Wenngleich die Messung auch öfter als dreimal erfolgen kann, so hat sich doch gezeigt, dass der nach drei wiederholten Messungen bei vertretbarem insgesamtem Zeitaufwand eine hohe Aussagekraft liefert.

Das erfindungsgemäße Verfahren wird vorzugsweise dadurch weitergebildet, dass der Schritt des Vorbereitens das Vorbereiten eines äußeren Abschnitts und eines inneren Abschnitts der Oberfläche des Anlagenfundaments umfasst und/oder das Freilegen des Fundamentmaterials umfasst, beispielsweise mittels Entfernen einer Dichtungs- oder Decklage, und/oder das Abdecken eines angrenzend an das Fundament angeordneten Bereichs der Turmwand mit einer Schutzfolie umfasst.

Die Erfindung löst die ihr zugrunde liegende Aufgabe bei einem Verfahren der eingangs genannten Art gemäß einem zweiten Aspekt dadurch, dass der Schritt des Einbringens der Vielzahl von Bohrungen das Einbringen von 10 bis 40 Bohrungen, vorzugsweise 20 Bohrungen, entlang eines Kreisumfangs außerhalb des Turms der Windenergieanlage, sowie das Einbringen von 10 bis 40 Bohrungen, vorzugsweise 20 Bohrungen, entlang eines Kreisumfangs innerhalb des Turms der Windenergieanlage umfasst.

Die Merkmale und Ausführungsformen gemäß dem zweiten Aspekt der Erfindung sind zugleich vorteilhafte Weiterbildungen der Erfindungen gemäß dem (weiter oben beschriebenen ersten Aspekt) sowie eines (weiter unten beschriebenen) dritten Aspekts. Es hat sich überraschend herausgestellt, dass die Anzahl der von der Fundamentoberfläche nach unten eingebrachten Bohrungen zum Ausführen des Injektionsverfahrens entscheidenden Einfluss auf die Güte der Stabilisierung hat. Ist der Abstand zwischen den benachbarten Injektionsbohrungen zu groß, werden potenziell zwischen den Bohrungen horizontal verlaufende Fundamentschäden, Spalte oder Risse, nicht von den Injektionsbohrungen erreicht und später nicht oder nur unzureichend mit Füllmaterial ausgefüllt. Ist der Abstand zwischen benachbarten Injektionsbohrungen zu gering gewählt, muss ein zu hoher Arbeits- und Zeitaufwand für das Setzen der Bohrungen aufgewandt werden. Besonders bevorzugt wird daher abhängig vom Anlagendurchmesser eine Anordnung der vorstehend erwähnten Anzahl von Bohrungen. Es hat sich zudem als besonders vorteilhaft herausgestellt, sowohl von außerhalb des Anlagenturms als auch von innerhalb des Anlagenturms in das Fundament hinab zu bohren, weil hierdurch eine homogene Verteilung der Injektionseinlässe erreicht wird, und gleichzeitig sowohl die sich außerhalb als auch die sich nach innerhalb - bezogen auf den Querschnitt des Fundament - erstreckenden Fundamentschäden, Spalte oder Risse, zum Ausfüllen mit Injektionsmaterial erschlossen werden können.

Vorzugsweise umfasst das Verfahren die Schritte:
- Endoskopieren jeder in das Fundament eingebrachten Bohrung,
- Feststellen, ob die Bohrung sich bis zu einem Ankersegment der Windenergieanlage erstreckt, und
- Feststellen, ob die Bohrung frei von Verschmutzungen, insbesondere in Form von Wasser und/oder Partikeln, ist.

Das Verfahren wird dadurch vorteilhaft weiter gebildet, dass es einen, mehrere oder sämtliche der Schritte umfasst:
- Reinigen der Bohrung mittels Ausspülen und/oder Ausblasen, wenn Verschmutzungen festgestellt worden sind,
- Erhöhen der Bohrtiefe, wenn sich die Bohrung noch nicht bis zu dem Ankersegment der Windehergieanlage erstreckt,
- Wiederholen des Schritts des Endoskopierens.

Der Endoskopievorgang nimmt hierbei eine Doppelfunktion ein, die einerseits die Evaluierung ermöglicht, ob das Ankersegment der Windenergieanlage von den Injektionsbohrungen erreicht ist. Andererseits wird die Bewertung ermöglicht, ob die Injektionsbohrungen und erschlossenen Hohlräume ausreichend frei von Feuchtigkeit und Schmutz sind, um das Injektionsmaterial einführen zu können, ohne ein Aushärten und zuverlässiges Herstellen des Kraftschlusses im weiteren Verlauf zu gefährden.

Die Erfindung löst die ihr zugrunde liegende Aufgabe gemäß einem dritten Aspekt der Erfindung dadurch, dass als aushärtbare Masse ein niedrigviskoses Epoxidharz in die Vielzahl von Bohrungen eingebracht wird, vorzugsweise ein hochdruckfestes, und/oder hochzugfestes und/oder feuchtigkeitsresistentes Epoxidharz. Die Merkmale und Ausführungsformen gemäß dem dritten Aspekt der Erfindung sind zugleich vorteilhafte Weiterbildungen der Erfindung gemäß den (weiter oben beschriebenen) ersten und zweiten Aspekten der Erfindung.

Unter einem niedrig viskosen Verhalten wird im vorliegenden Fall das Vorliegen einer Mischviskosität von 400 mPa s, bevorzugt von 350 mPa s und weniger, besonders bevorzugt im Bereich von 100 mPa s und weniger verstanden.

Unter Mischviskosität wird vorliegend die Viskosität des Epoxidharzes im gemischten, nicht ausgehärteten Zustand bei einer Temperatur von vorzugsweise 18-25°C verstanden.

Unter einem hochdruckfesten Verhalten wird vorliegend das Vorliegen einer Druckfestigkeit im ausgehärteten Zustand, vorzugsweise nach 7 Tagen, bei mindestens 4°C in einem Bereich von 35 N/mm² oder mehr, vorzugsweise in einem Bereich von 45 N/mm² oder mehr, besonders bevorzugt in einem Bereich von 70 N/mm² oder mehr verstanden. Die Bestimmung der Druckfestigkeit kann beispielsweise nach DIN EN 196 T1 oder nach ASTM D-695 erfolgen.

Unter hochzugfest wird vorliegend die Zugfestigkeit im ausgehärteten Zustand, vorzugsweise nach 7 Tagen, von 35 N/mm² oder mehr, besonders bevorzugt in einem Bereich von 45 N/mm² oder mehr, verstanden. Die Bestimmung der Zugfestigkeit erfolgt beispielsweise nach DIN 53455 oder nach ASTM D-638.

Unter feuchtigkeitsresistentem Verhalten wird vorliegend die Eigenschaft verstanden, einer Wasserabsorption zu widerstehen. Vorzugsweise beträgt die Wasserabsorption nach 7 Tagen, über einen Zeitraum 24 Stunden bei stetem Wasserkontakt eine Absorption von 2% oder weniger, vorzugsweise 0,3% oder weniger. Die Bestimmung der Wasserabsorption erfolgt beispielsweise nach ASTM D-570. Die Überwachung des Absorptionsverhaltens ist in erster Linie relevant für einen Beobachtungszeitraum während des Aushärtens. Sobald das Epoxidharz ausgehärtet ist, kann das Material als wasserdicht angenommen werden.

Die Erfindung wird vorzugsweise dadurch weitergebildet, dass das Epoxidharz aus zwei oder mehr Komponenten gemischt wird.

Vorzugsweise umfasst in dem erfindungsgemäßen Verfahren das Nachbereiten des zumindest einen Abschnitts der Oberfläche des Anlagenfundaments das Reprofilieren der Oberfläche des Fundaments mittels Auffüllen der freigelegten Bereiche des Fundaments mit einem kunststoffmodifizierten, zementgebundenen Mörtel. Ein solcher Mörtel ist auch bekannt als PCC-Mörtel (Polymer Cement Concrete). Der besondere Vorteil eines solchen PCC-Mörtels liegt darin, dass er auch bei dynamischer Wechselbeanspruchung aushärtet, ohne seine Funktion zu verlieren. Vorzugsweise weist der kunststoffmodifizierte, zementgebundene Mörtel eine Druckfestigkeit von 45 N/mm² oder mehr auf, bestimmt beispielsweise nach EN 12190 und/oder ein Elastizitätsmodul im Bereich von 20 kN/mm² (GPa) oder mehr, bestimmt beispielsweise nach EN 13412. Derartige Mörtel können ausgewählt sein aus Klasse R4 gemäß DIN EN 1504-3 oder aus Beanspruchbarkeitsklasse M3 gemäß DAfStb-Richtlinie Schutz und Instandsetzung.

Die Erfindung wir im Folgenden anhand eines bevorzugten Ausführungsbeispiels unter Berücksichtigung verschiedener Aspekte der Erfindung und unter Bezugnahme auf die beigefügten Figuren näher erläutert. Hierbei zeigen:

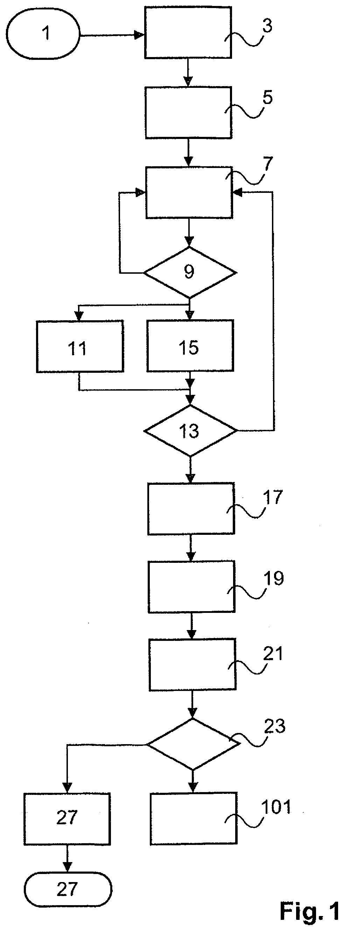

- Figur 1: einen ersten Teil eines Flussdiagramm des erfindungsgemäßen Verfahrens, und
- Figur 2: einen zweiten Teil des Flussdiagramms des erfindungsgemäßen Verfahrens.

Das Verfahren wird in Schritt 1 gestartet. Sodann wird zunächst als Schritt 3 die Windenergieanlage deaktiviert. In Schritt 5 wird der eine oder werden die mehreren Längenänderungssensoren optional an der Turmwand der Windenergieanlage oder am Fundament angebracht und mit dem jeweils anderen Teil verbunden. Der oder die Längenänderungssensoren werden in Schritt 5 zudem kalibriert. Bei Schritt 7 erfolgt das Bestimmen der Windgeschwindigkeit. Optional (nicht dargestellt) erfolgt das Bestimmen der Windgeschwindigkeit bei noch aktivierter Windenergieanlage, und die Windenergieanlage wird gemäß Schritt 3 erst dann deaktiviert, wenn in einem Schritt 9 eine Windgeschwindigkeit von größer oder gleich 7,5 m/s, bevorzugt größer oder gleich 10 m/s gemessen wird. Wird eine Geschwindigkeit von weniger als 7,5 m/s oder bevorzugt weniger als 10 m/s festgestellt, wird die Bestimmung der Windgeschwindigkeit bei Schritt 7 fortgesetzt.

Liegt eine ausreichend hohe Windgeschwindigkeit vor, und ist die Windenergieanlage deaktiviert, wird bei Schritt 11 das Starten der Windenergieanlage und der Messung der vertikalen Turmbewegung durch die Längenänderungssensoren vorgenommen. Gleichzeitig oder im Wesentlichen gleichzeitig startet die Überwachung oder Messung der Veränderung der Gondelposition in einem Schritt 15. Bei dem nachfolgend abgebildeten Schritt wird überwacht, ob eine Winkeländerung bzw. Positionsänderung der Gondel auftritt. Ist dies der Fall, wird die Messung abgebrochen, und die Schritte 5 bis 11 für die neue Gondelposition wiederholt. Hierzu müssen gegebenenfalls die angebrachten Längenänderungssensoren demontiert und an der neuen Luv- bzw.

Leeseite neu montiert werden. Optional ist hierfür eine Führungsmechanik zum einfachen Verschwenken und Neupositionieren der Sensoren vorgesehen.

Für den Fall, dass während der gesamten Zeit des Messvorgangs ein im Wesentlichen konstanter Winkel der Gondel bzw. eine konstante Gondelposition in Schritt 13 festzustellen ist, wird die Messung in Schritt 17 regulär beendet. In Schritt 19 erfolgt eine Kompensationsberechnung der tatsächlichen vertikalen Turmbewegung mittels Subtraktion der anlagentypischen, und vorbestimmten elastizitätsbedingten vertikalen Bewegungsanteile.

In Schritt 21 wird das (optional) kompensierte Messergebnis aus den Schritten 11 bis 19 gespeichert, vorzugsweise durch Hinterlegen auf einem elektronischen Datenträger.

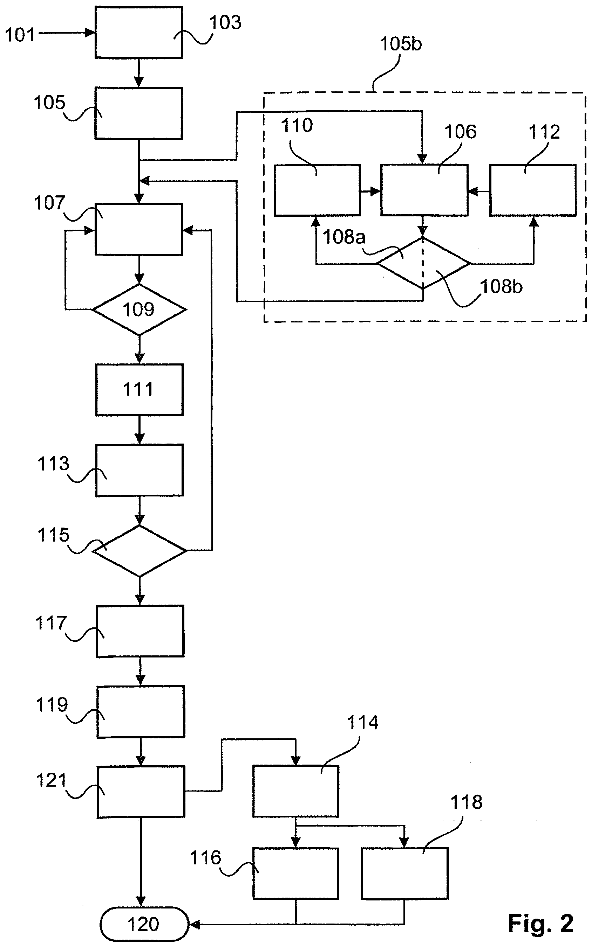

Falls das in Schritt 21 gespeicherte Ergebnis eine vertikale Turmbewegung von größer oder gleich 3 mm, besonders bevorzugt von größer oder gleich 1 mm repräsentiert, wird die Durchführung der Stabilisierungsmaßnahme gemäß Schritt 101 iniziiert (siehe im Weiteren Figur 2). Falls der in Schritt 21 gespeicherte Wert eine vertikale Turmbewegung von weniger als 3 mm, vorzugsweise weniger als 1 mm repräsentiert, wird in Schritt 25 die Mitteilung ausgegeben, dass kein Stabilisierungsbedarf besteht, und das Verfahren in Schritt 27 beendet.

Das Stabilisierungsverfahren ist schematisch in Figur 2 dargestellt. Zunächst wird die Stabilisierung in Schritt 101 gestartet. Schritt 103 zeigt das Vorbereiten zumindest eines Abschnitts der Oberfläche eines Fundaments der Windenergieanlage zum Ansetzen von Bohrmitteln. In Schritt 105 wird eine Vielzahl von Bohrungen mittels der Bohrmittel in die vorbereitete Oberfläche bis zu einer vorbestimmten Tiefe eingebracht, vorzugsweise bis zu einem Ankersegment der Fundamentsektion der Windenergieanlage. Spätestens zu Beginn von Schritt 105 sollte die Windenergieanlage deaktiviert werden. Optional schließt sich an das Einbringen der Vielzahl von Bohrungen gemäß den Schritten 106, 108, 110, 112 ein Endoskopievorgang an. Der Schritt des Endoskopierens, durch die Strichellinie angedeutet als Schritt 105b, umfasst bei Schritt 106 das Endoskopieren jeder in das Fundament eingebrachten Bohrung, vorzugsweise mittels Einführen eines optischen Endoskops. Hierbei übernimmt das Endoskop eine Doppelfunktion; wird in Schritt 108a festgestellt, dass die vorbestimmte Bohrtiefe, und insbesondere das Ankersegment der Fundamentsektion der Windenergieanlage noch nicht erreicht wurde, wird in Schritt 110 durch erneutes Ansetzen der Bohrmittel die Bohrtiefe erhöht, beispielsweise in vorgegebenen Intervallen.

Sodann wird erneut gemäß Schritt 106 endoskopiert. Wird in Schritt 108b festgestellt, dass die angelegte Bohrung noch nicht ausreichend von Wasser und/oder Verschmutzungen befreit ist, wird in Schritt 112 ein erneutes Reinigen der Bohrung mittels ausspülen und/oder ausblasen vorgenommen. Sodann wird der EndoskopieVorgang gemäß Schritt 106 wiederholt. Die Schritte 108, 108b können simultan erfolgen, die Schritte 110, 112 erfolgen vorzugsweise nacheinander.

Nach dem Einbringen der Bohrungen in das Fundament und optional dem Durchführen des Endoskopievorgangs gemäß Schritt 105b, wird gemäß Schritt 107 Injektionsmaterial in die gesetzten Bohrungen verfüllt. Das Initiieren erfolgt vorzugsweise mittels Injektionspackern. Als Injektionsmaterial wird vorzugsweise ein niedrigviskoses, hochdruckfestes und hochzugfestes Epoxidharz verwendet. Dem Fachmann stehen hierfür beispielsweise die Werkstoffe MC DUR 1264 FF des Unternehmens MC-Bauchemie zur Verfügung oder SIKADUR® 35 HI-MOD-LV von Sika Construction, sowie alternativ WEBAC® 4170 von WEBAC Chemie. Dem Fachmann ist es zudem ohne weiteres möglich, anhand der vorstehend beschriebenen Kriterien und ggf. anhand der Durchführung von Vorversuchen ein geeignetes Epoxidharz auszuwählen und entsprechend der jeweils gültigen Herstellungsanweisung herzurichten. Unter beachten der jeweils vorgeschriebenen Mischverhältnisse, Temperaturen und Umdrehungszahlen wird aus zwei oder mehr Komponenten ein solches Epoxidharz angerührt und mittels der Injektionspacker injiziert.

Bei Schritt 109 wird festgestellt, ob Injektionsmaterial aus einer der anderen gesetzten Injektionsöffnungen oder aus einem freiliegenden Spalt austritt. Ist dies nicht der Fall, wird Schritt 107 fortgesetzt bzw. wiederholt. Tritt Injektionsmaterial aus, wird bei Schritt 111 protokolliert, a) wo das Injektionsmaterial eingefüllt wurde, und b) wo das Injektionsmaterial austritt. Bei Schritt 113 wird anschließend mit dem nächsten, also vorzugsweise benachbarten Injektionsloch mit dem Einfüllen von Injektionsmaterial fortgefahren. Optional wird für jedes gesetzte Bohrloch das Verfahren analog der Schritte 107, 109, 111 durchgeführt. Auf diese Weise ist protokolliert, wie sich das eingefüllte Material unterhalb der Fundamentoberfläche ausbreitet, was Rückschlüsse über einerseits die verfüllte Menge des Injektionsmaterials und andererseits über den Ausbreitungsweg des Injektionsmaterials erlaubt.

Ist bei Schritt 115 festgestellt, dass in alle gesetzten Bohrungen Injektionsmaterial eingefüllt wurde, wird bei Schritt 117 kontrolliert, ob alle Bohrungen vollständig verfüllt sind oder ob eine Nachverpressen notwendig ist. Ist ein Nachverpressen notwendig, werden die Schritte 107 bis 117 wiederholt. Hierdurch wird gewährleistet, dass vollständig verpresst wird.

In Schritt 119 erfolgt das Aushärten des Injektionsmaterials. Schritt 121 umfasst das Nacharbeiten bzw. Nachbereiten des zumindest einen Abschnitts der Oberfläche des Anlagenfundaments, insbesondere dessen, welcher zum Setzen der Bohrungen freigelegt wurde. Dies umfasst vorzugsweise bei Schritt 114 das Reprofilieren der Oberfläche des Fundaments mittels Auffüllen der freigelegten Bereiche des Fundaments mit einem kunststoffmodfizierten, zementgebundenen Mörtel sowie ggf. weiterer Materialien, beispielsweise einer Haftbrücke. Sodann erfolgt in den Schritten 116 das Aushärten des Mörtels bzw. aufgefüllten Materials und in Schritt 118 das Aktivieren der Windenergieanlage. Durch den erfindungsgemäß vorgeschlagenen kunststoffmodifizierten, zementgefundenen Mörtel ist beides gleichzeitig durchführbar, weil der Mörtel ein funktionsgetreues Aushärten auch unter dynamischer Beanspruchung ermöglicht. Schließlich erfolgt in Schritt 120 das Ende des Verfahrens.

## Patentansprüche

1. Verfahren zur Stabilisierung einer Windenergieanlage, insbesondere der Verbindung einer Fundamentsektion der Windenergieanlage mit dem Fundament der Windenergieanlage, umfassend die Schritte:
- Durchführen einer Stabilisierungsmaßnahme, umfassend
- Vorbereiten zumindest eines Abschnitts der Oberfläche eines Fundaments der Windenergieanlage zum Ansetzen von Bohrmitteln,
- Einbringen einer Vielzahl von Bohrungen mittels der Bohrmittel in die vorbereitete Oberfläche bis zu einer vorbestimmten Tiefe, vorzugsweise bis zu einem Ankersegment der Fundamentsektion,
- Einbringen einer aushärtbaren Masse in die Vielzahl von Bohrungen,
- Aushärten der eingebrachten, aushärtbaren Masse in den Bohrungen, und
- Nachbereiten des zumindest einen Abschnitts der Oberfläche des Anlagenfundaments,
**gekennzeichnet durch**
- Durchführen einer Früherkennung des Stabilisierungsbedarfs der Windenergieanlage mittels Messen der Turmbewegung während des Betriebs der Windenergieanlage, wobei die Früherkennung umfasst:
- Messen einer vertikalen Turmbewegung relativ zu dem Fundament der Windenergieanlage mittels eines oder mehrerer Längenänderungssensoren, die an der Luvseite und/oder der Leeseite des Turms positioniert sind.

2. Verfahren nach Anspruch 1,
wobei die Früherkennung umfasst:
- Deaktivieren der Windenergieanlage,
- Kalibrieren des oder der Längenänderungssensoren,
- Aktivieren der Windenergieanlage,
- Starten der Messung der Turmbewegung, und
- Speichern der gemessenen Turmbewegung, sobald die Schwankung der von dem oder den Längenänderungssensoren ausgegebenen Werte einen vorbestimmten Wert unterschreitet, vorzugsweise einen Wert von 1 mm unterschreitet, besonders bevorzugt den Wert Null annimmt.

3. Verfahren nach Anspruch 2,
wobei die Früherkennung umfasst:
- Feststellen der fehlenden Notwendigkeit einer Stabilisierungsmaßnahme, wenn die gespeicherte Turmbewegung einen Betrag von 3 mm, bevorzugt 1 mm, unterschreitet.

4. Verfahren nach Anspruch 2 oder 3,
umfassend die Schritte:
- Kompensation der gemessenen Turmbewegung mittels Subtraktion der elastizitätsbedingten Auslenkung der Längenänderungssensoren, und
- Speichern der kompensierten Turmbewegung.

5. Verfahren nach einem der vorstehenden Ansprüche,
wobei das Messen der Turmbewegung mittels einer oder mehrerer Messuhren erfolgt, die vorzugsweise mittels eines Magnetstativs an der Turmwand der Windenergieanlage, besonders bevorzugt innen, angebracht sind oder werden.

6. Verfahren nach einem der vorstehenden Ansprüche,
umfassend die Schritte:
- Messen der die Windenergieanlage antreibenden Windgeschwindigkeit, und
- Durchführen der Früherkennung, wenn die Windgeschwindigkeit 7,5 m/s oder mehr, bevorzugt 10 m/s oder mehr beträgt.

7. Verfahren nach einem der vorstehenden Ansprüche,
umfassend den Schritt:
- Überwachen der Gondelposition der Windenergieanlage während des Messens der Turmbewegung,
- Abbrechen des Messvorgangs der Turmbewegung, wenn eine Veränderung der Gondelposition festgestellt wird, vorzugsweise in einem Bereich von 5° oder mehr,
- Neupositionieren des oder der Längenänderungssensoren an der veränderten Luvseite und/oder der Leeseite des Turms in Abhängigkeit der Veränderung der Gondelposition, und
- Neustarten der Messung der Turmbewegung.

8. Verfahren nach einem der vorstehenden Ansprüche,
wobei der Schritt des Messens der Turmbewegung dreimal ausgeführt wird, und umfassend den Schritt:
- Bilden eines Mittelwerts der drei erfolgten Messungen der Turmbewegung.

9. Verfahren nach einem der vorstehenden Ansprüche,
wobei der Schritt des Vorbereitens
- das Vorbereiten eines äußeren Abschnitts und eines inneren Abschnitts der Oberfläche des Anlagenfundaments umfasst, und/oder
- das Freilegen des Fundamentmaterials umfasst, beispielsweise mittels Entfernen einer Dichtungs- oder Decklage, und/oder
- das Abdecken eines angrenzend an das Fundament angeordneten Bereichs der Turmwand mit einer Schutzfolie.

10. Verfahren nach einem der vorstehenden Ansprüche,
wobei der Schritt des Einbringens der Vielzahl von Bohrungen das Einbringen von 10 bis 40 Bohrungen, vorzugsweise 20 Bohrungen, entlang eines Kreisumfangs außerhalb des Turms der Windenergieanlage, sowie das Einbringen von 10 bis 30 Bohrungen, vorzugsweise 20 Bohrungen, entlang eines Kreisumfangs innerhalb des Turms der Windenergieanlage umfasst.

11. Verfahren nach einem der vorstehenden Ansprüche,
umfassend die Schritte:
- Endoskopieren jeder in das Fundament eingebrachten Bohrung,
- Feststellen, ob die Bohrung sich bis zu einem Ankersegment der Windenergieanlage erstreckt, und
- Feststellen, ob die Bohrung frei von Verschmutzungen, insbesondere in Form von Wasser und/oder Partikeln, ist.

12. Verfahren nach Anspruch nach Anspruch 11,
umfassend einen, mehrere oder sämtliche der Schritte:
- Reinigen der Bohrung mittels Ausspülen und/oder Ausblasen, wenn Verschmutzungen festgestellt worden sind,
- Erhöhen der Bohrtiefe, wenn sich die Bohrung noch nicht bis zu dem Ankersegment der Windenergieanlage erstreckt, und/oder
- Wiederholen des Schritts des Endoskopierens.

13. Verfahren nach einem der vorstehenden Ansprüche,
wobei als aushärtbare Masse ein niedrigviskoses Epoxidharz in die Vielzahl von Bohrungen eingebracht wird, vorzugsweise ein hochdruckfestes, und/oder hoch zugfestes und/oder feuchtigkeitsresistentes Epoxidharz.

14. Verfahren nach Anspruch 13,
wobei das Epoxidharz aus zwei oder mehr Komponenten gemischt wird.

15. Verfahren nach einem der vorstehenden Ansprüche,
wobei das Nachbereiten des zumindest einen Abschnitts der Oberfläche des Anlagenfundaments umfasst:
- Reprofilieren der Oberfläche des Fundaments mittels Auffüllen der freigelegten Bereiche des Fundaments mit einem kunststoffmodifizierten, zementgebundenen Mörtel.

## Claims

1. A method of stabilising a wind power installation, in particular the connection of a foundation section of the wind power installation to the foundation of the wind power installation, including the steps:
- performing a stabilisation measure, including
- pre-preparation of at least a portion of the surface of a foundation of the wind power installation for the application of boring means,
- introducing a plurality of bores by means of the boring means in the pre-prepared surface to a predetermined depth, preferably to an anchor segment of the foundation section,
- introducing a hardenable material into the plurality of bores,
- hardening the introduced hardenable material in the bores, and
- post-preparation of the at least one portion of the surface of the installation foundation, **characterised by**
- performing early identification of the need for stabilisation of the wind power installation by means of measurement of the pylon movement during operation of the wind power installation, wherein early identification includes:
- measuring a vertical pylon movement relative to the foundation of the wind power installation by means of one or more length change sensors positioned at the windward side and/or or the leeward side of the pylon.

2. A method according to claim 1 wherein early identification includes:
- deactivating the wind power installation,
- calibrating the length change sensor or sensors,
- activating the wind power installation,
- starting measurement of the pylon movement, and
- storing the measured pylon movement as soon as the fluctuation in values outputted by the length change sensor or sensors falls below a predetermined value, preferably falls below a value of 1 mm, and particularly preferably assumes the value of zero.

3. A method according to claim 2 wherein early identification includes:
- establishing the lack of need for a stabilisation measure if the stored pylon movement falls below an amount of 3 mm, preferably 1 mm.

4. A method according to claim 2 or claim 3 including the steps:
- compensating for the measured pylon movement by means of subtraction of the elasticity-induced deflection of the length change sensors, and
- storing the compensated pylon movement.

5. A method according to one of the preceding claims wherein measurement of the pylon movement is effected by means of one or more dial gauges which are or become mounted to the pylon wall of the wind power installation, preferably by means of a magnetic support, particularly preferably at the inside.

6. A method according to one of the preceding claims including the steps:
- measuring the wind speed driving the wind power installation, and
- performing early identification if the wind speed is 7.5 m/s or more, preferably 10 m/s or more.

7. A method according to one of the preceding claims including the step:
- monitoring the pod position of the wind power installation during measurement of the pylon movement,
- discontinuing the pylon movement measuring operation if a change in the pod position is detected, preferably in a range of 5° or more,
- re-positioning the length change sensor or sensors at the changed windward side and/or the leeward side of the pylon in dependence on the change in the pod position, and
- re-starting the pylon movement measurement.

8. A method according to one of the preceding claims wherein the step of measuring the pylon movement is performed three times and including the step:
- forming an average value of the three pylon movement measurements made.

9. A method according to one of the preceding claims wherein the pre-preparation step includes:
- pre-preparation of an outer portion and an inner portion of the surface of the installation foundation, and/or
- exposing the foundation material, for example by means of removal of a sealing or cover layer, and/or
- covering a region of the pylon wall, that is arranged adjoining the foundation, by means of a protective film.

10. A method according to one of the preceding claims,
wherein the step of introducing the plurality of bores includes introducing from 10 to 40 bores, preferably 20 bores, along the periphery of a circle outside the pylon of the wind power installation, and introducing from 10 to 30 bores, preferably 20 bores, along the periphery of a circle within the pylon of the wind power installation.

11. A method according to one of the preceding claims including the steps:
- endoscope inspection of each bore introduced into the foundation,
- establishing whether the bore extends to an anchor segment of the wind power installation, and
- establishing whether the bore is free of contaminations, in particular in the form of water and/or particles.

12. A method according to claim 11 including one, more or all of the steps:
- cleaning the bore by means of flushing and/or blowing it out when contaminations have been detected,
- increasing the bore depth if the bore does not yet extend to the anchor segment of the wind power installation, and/or
- repeating the endoscope inspection step.

13. A method according to one of the preceding claims,
wherein a low-viscosity epoxy resin is introduced as the hardenable material into the plurality of bores, preferably an epoxy resin which is resistant to high pressure and/or which has a high level of tensile strength and/or which is moisture-resistant.

14. A method according to claim 13 wherein the epoxy resin is mixed from two or more components.

15. A method according to one of the preceding claims wherein post-preparation of the at least one portion of the surface of the installation foundation includes:
- re-profiling the surface of the foundation by means of filling in the exposed regions of the foundation with a plastic-modified, cement-bound mortar.

## Revendications

1. Procédé de stabilisation d'une éolienne, en particulier de la liaison d'une section de fondation de l'éolienne à la fondation de l'éolienne, comprenant les étapes de :
- la réalisation d'une mesure de stabilisation, comprenant
- la préparation d'au moins une portion de la surface d'une fondation de l'éolienne pour l'application de moyens de forage,
- l'introduction d'une pluralité de forages au moyen des moyens de forage dans la surface préparée jusqu'à une profondeur prédéfinie, de préférence jusqu'à un segment d'ancrage de la section de fondation,
- l'introduction d'une masse durcissable dans la pluralité de forages,
- le durcissement de la masse durcissable, introduite dans les forages, et
- le suivi de l'au moins une portion de la surface de la fondation de l'installation,
**caractérisé par**
- la réalisation d'une détection précoce du besoin de stabilisation de l'éolienne par mesure du mouvement du mât pendant le fonctionnement de l'éolienne, dans lequel la détection précoce comprend :
- la mesure d'un mouvement vertical du mât par rapport à la fondation de l'éolienne au moyen d'un ou plusieurs capteurs de variation de longueur, qui sont positionnés au vent et/ou sous le vent du mât.

2. Procédé selon la revendication 1,
dans lequel la détection précoce comprend :
- la désactivation de l'éolienne,
- le calibrage du ou des capteurs de variation de longueur,
- l'activation de l'éolienne,
- le démarrage de la mesure du mouvement du mât, et
- l'enregistrement du mouvement mesuré du mât, dès que la fluctuation des valeurs émises par le ou les capteurs de variation de longueur devient inférieure à une valeur prédéterminée, de préférence devient inférieure à une valeur de 1 mm, de manière particulièrement préférée prend la valeur zéro.

3. Procédé selon la revendication 2,
dans lequel la détection précoce comprend :
- la constatation de l'absence de nécessité d'une mesure de stabilisation, lorsque le mouvement enregistré du mât devient inférieur à une valeur de 3 mm, de préférence 1 mm.

4. Procédé selon la revendication 2 ou 3,
comprenant les étapes de :
- compensation du mouvement mesuré du mât par soustraction de la déviation liée à l'élasticité des capteurs de variation de longueur, et
- enregistrement du mouvement compensé du mât.

5. Procédé selon l'une quelconque des revendications précédentes,
dans lequel la mesure du mouvement du mât se fait au moyen d'un ou plusieurs comparateurs, qui sont ou seront appliqués de préférence au moyen d'un support magnétique au niveau de la paroi du mât de l'éolienne, de manière particulièrement préférée à l'intérieur.

6. Procédé selon l'une quelconque des revendications précédentes,
comprenant les étapes de :
- mesure de la vitesse du vent entraînant l'éolienne,
et
- réalisation de la détection précoce, lorsque la vitesse du vent est de 7,5 m/s ou plus, de préférence de 10 m/s ou plus.

7. Procédé selon l'une quelconque des revendications précédentes,
comprenant l'étape de :
- surveillance de la position de la nacelle de l'éolienne pendant la mesure du mouvement du mât,
- interruption de l'opération de mesure du mouvement du mât, lorsqu'un changement de la position de la nacelle est constaté, de préférence de l'ordre de 5° ou plus,
- repositionnement du ou des capteurs de variation de longueur au vent et/ou sous le vent modifié du mât en fonction du changement de la position de la nacelle, et
- redémarrage de la mesure du mouvement du mât.

8. Procédé selon l'une quelconque des revendications précédentes,
dans lequel l'étape de la mesure du mouvement du mât est réalisée trois fois, et comprenant l'étape de :
- formation d'une moyenne des trois mesures effectuées du mouvement du mât.

9. Procédé selon l'une quelconque des revendications précédentes,
dans lequel l'étape de la préparation
- comprend la préparation d'une portion extérieure et d'une portion intérieure de la surface de la fondation de l'installation, et/ou
- comprend la mise à découvert du matériau de fondation, par exemple par retrait d'une couche d'étanchéité ou de recouvrement, et/ou
- le recouvrement d'une zone de la paroi du mât agencée adjacente à la fondation avec un film de protection.

10. Procédé selon l'une quelconque des revendications précédentes,
dans lequel l'étape de l'introduction de la pluralité de forages comprend l'introduction de 10 à 40 forages, de préférence de 20 forages, le long d'une circonférence à l'extérieur du mât de l'éolienne, ainsi que l'introduction de 10 à 30 forages, de préférence de 20 forages, le long d'une circonférence à l'intérieur du mât de l'éolienne.

11. Procédé selon l'une quelconque des revendications précédentes,
comprenant les étapes de :
- endoscopie de chaque forage introduit dans la fondation,
- constatation, si le forage s'étend jusqu'à un segment d'ancrage de l'éolienne, et
- constatation, si le forage est dépourvu de souillures, en particulier sous forme d'eau et/ou de particules.

12. Procédé selon la revendication 11,
comprenant une, plusieurs ou toutes les étapes de :
- nettoyage du forage par rinçage et/ou soufflage, lorsque des souillures ont été constatées,
- augmentation de la profondeur de forage, lorsque le forage ne s'étend pas encore jusqu'au segment d'ancrage de l'éolienne, et/ou
- répétition de l'étape de l'endoscopie.

13. Procédé selon l'une quelconque des revendications précédentes,
dans lequel une résine époxy à faible viscosité est introduite comme masse durcissable dans la pluralité de forages, de préférence une résine époxy résistante à la pression élevée, et/ou très résistante à la traction et/ou résistante à l'humidité.

14. Procédé selon la revendication 13,
dans lequel la résine époxy est mélangée à partir de deux ou plusieurs composants.

15. Procédé selon l'une quelconque des revendications précédentes,
dans lequel le suivi de l'au moins une portion de la surface de la fondation de l'installation comprend :
- le reprofilage de la surface de la fondation par comblement des zones mises à découvert de la fondation avec un mortier au ciment modifié par matière synthétique.
